# EUROPÄISCHE PATENTSCHRIFT

(11) **EP 1 876 006 B1**
(45) Veröffentlichungstag und Bekanntmachung des Hinweises auf die Patenterteilung: **11.03.2009**
(21) Anmeldenummer: 07012543.0
(22) Anmeldetag: 27.06.2007
(51) Int. Cl.: B29C 47/02

(54) **Vorrichtung zur Herstellung von Metallverbundrohren**
Device for manufacturing composite metal pipes
Dispositif et procédé de tubes d'assemblage en métal

(30) Priorität: 05.07.2006 DE 102006030951
(43) Veröffentlichungstag der Anmeldung: 09.01.2008
(73) Patentinhaber: ADKA GmbH, 98544 Zella-Mehlis (DE)
(72) Erfinder: Adler, Erik, 98544 Zella-Mehlis / Thüringen (DE); Kahl, Jörg, 98528 Sulh-Goldlauter / Thüringen (DE)

(56) Entgegenhaltungen:
- EP-A2- 0 644 031
- FR-A- 1 385 944
- FR-A1- 2 434 326
- JP-A- 58 136 425

## Beschreibung

Die Erfindung betrifft eine Vorrichtung zur Herstellung von Metallverbundrohren nach dem Oberbegriff des Anspruchs 1.

Im Stand der Technik werden zur Herstellung von Metallverbundrohren zwei voneinander grundsätzlich unterschiedliche Varianten vorbeschrieben.

Bei der ersten Variante wird eine innere Kunststoffschicht unmittelbar nach dem Verschweißen des Metallrohres in das Metallrohr hinein extrudiert, siehe zum Beispiel EP 0 644 031.

Dabei wird, wie beispielsweise auch in der WO 0044546 vorbeschrieben, zunächst ein Aluminiumband zu einem Rohr vorgeformt und anschließend einer kombinierten Extrusions- und Schweißvorrichtung zugeführt.

In dieser kombinierten Extrusions- und Schweißvorrichtung wird das Rohr fertig geformt, direkt auf dem Innenrohrextrusionswerkzeug verschweißt, wobei unmittelbar nach dem Verschweißen des Aluminiumrohres auf dem Innenrohrextrusionswerkzeug mittels diesem in das Aluminiumrohr ein Haftvermittler und (auf diesen) eine Kunststoffschicht angebracht wird. Hierfür sind an einem zentralen Extrusionswerkzeug zumeist vier Extruder angeordnet.

Auch in der DE 10022823 A1 wird ein die erste Variante nutzendes Verfahren zur Herstellung eines Mehrschicht-Verbundrohr vorgestellt.

Allen nach dieser ersten Variante arbeitende vorgenannten Lösungen haben dabei folgende Nachteile.

Infolge des Verschweißens des Metallrohres auf dem (Innenrohr-) Extrusionswerkzeug wird dieses Extrusionswerkzeuges an der Schweißstelle zwangsläufig punktuell stark überhitzt.

Diese Überhitzung führt aber auch zu einem unerwünschten unregelmäßigen Überhitzten des Kunststoffes im Bereich der Schweißstelle mit zwangsläufig daraus resultierenden Qualitätsverlusten der Beschichtung.

Zudem aber führt diese fertigungsbedingte punktuellen Überhitzung des Innenrohrextrusionswerkzeuges im Bereich der Schweißstelle oftmals im Dauerbetrieb dann zu einem "Durchbrennen" des Innenrohrextrusionswerkzeuges, d.h. zur Zerstörung des Innenrohrextrusionswerkzeuges.

Hierdurch werden sehr hohe Kosten verursacht welche einerseits aus den Werkzeugkosten resultieren aber andererseits auch auf dem Produktionsstopp und die Instandsetzungsarbeiten zurückzuführen sind,

In der EP 0581208 wird eine weitere Vorrichtung zum kontinuierlichen Herstellen eines Mehrschichtverbundrohres nach der erstgenannten Variante vorgestellt.

Bei dieser Lösung kommt jedoch als Schweißverfahren das UltraschallSchweißen zum Einsatz.

Diese Schweißverfahren reduziert zwar etwas die punktuelle Überhitzung des Innenrohrextrusionswerkzeuges im Bereich der Schweißstelle, erlaubt jedoch (ohne einen massiven Qualitätsverlust) nur eine gegenüber anderen Schweißverfahren stark eingeschränkte Produktionsgeschwindigkeit.

Bei der in der EP 0581208 vorgeschlagenen Lösung führt der gleichzeitige Austritt des Haftvermittlers und des Kunststoffes jedoch zwangsläufig zu einer unzureichenden Haftung zwischen dem Aluminiumrohr und der/den Kunststoffschichten.

Mit einer Erhöhung der Produktionsgeschwindigkeit würde sich auch dieser Mangel überproportional verstärken.

Weitere Nachteile dieser Bauformen nach Variante 1 bestehen darin, dass infolge der sehr kompakten Extrusionsköpfe eine kostengünstige Kontrolle der Schweißnahtqualität wie auch eine effektive Kontrolle der Beschichtungsqualität nicht möglich ist.

Zudem führt der Aufbau der Extrusionsköpfe stets zu relativ langen Fließkanälen welche dann zwangsläufig hohe Drücke und langen Verweilzeiten im Werkzeug erfordern. Insbesondere bei der Verarbeitung von PE-Xb Materialien trägt dies zudem zu starken Qualitätseinbußen bei.

Darüber hinaus ermöglicht der kompakte Aufbau der Extruder zueinander zwangsläufig keine optimale Einbaulage, so dass die Zugänglichkeit bei Materialwechsel oder Störung nur bedingt möglich ist, wodurch sich der Instandhaltungsaufwand zudem stark erhöht.

Die andere, die zweite Variante zur Herstellung von Mehrschicht-Verbundrohren wird beispielsweise in der DE 43 04 717 A1, der DE 43 23 838 B4, der DE 195 36 698 C1 aber auch in der WO 01/43 894 A1 vorbeschrieben.

Bei dieser zweiten Variante wird zunächst ein einwandiges Kunststoffrohr extrudiert, abgekühlt, mit einem Abzug abgezogen und aufgewickelt bzw. unmittelbar nach dem Abzug direkt einer zweiten Anlage zur Weiterverarbeitung, d.h. dem Ummanteln zugeführt.

In dieser zweiten Anlage wird auf das von der Rolle oder dem Abzug dieser zweiten Anlage von außen zugeführte Kunststoffrohr ein Haftvermittler aufgetragen.

Nachfolgend wird aus einem Band ein Metallrohr hergestellt, beispielsweise ein Kupfer- oder Aluminiumrohr, welches um das Kunststoffrohr herum geformt und nachfolgend verlötet bzw. verschweißt wird.

Anschließend wird dieses so gebildete Metallrohr an das mit Haftvermittler beschichtete innere Kunststoffrohr angepresst, bzw. das innere Kunststoffrohr wird wie beispielsweise in der WO 01/43 894 A1 vorbeschrieben an die Innenseite des Metallrohres angepresst, wobei zur Verbindung des Metallrohres mit dem Innenrohr aus Kunststoff der zwischen den beiden Rohren angeordnete Haftvermittler durch Erwärmen aktiviert wird.

Dieses derart innen beschichtete Metallrohr kann dann nochmals mit einem Haftvermittler von außen beschichtet und nachfolgend mit einer äußeren Kunststoffschicht versehen werden.

Diese Variante zur Herstellung eines Metallverbundrohres ist infolge der vielen Arbeitsschritte, des großen Platzbedarfs der Fertigungslinie und des damit verbundenen hohen apparativen Aufwandes sehr kostenintensiv.

Zudem werden bei dieser diese zweiten Variante der Herstellung von Mehrschicht-Verbundrohres spezielle sehr teure Haftvermittler benötigt.

Dennoch kann beim Schweißen die auf dem Kunststoffinnenrohr aufgetragene Haftvermittlerschicht aber auch das Kunststoffinnenrohr beschädigt werden.

Darüber hinaus erfordert das Kalibrieren des Aluminiumrohres (auf das Innenrohr), wie auch das Reaktivieren des Haftvermittlers neben einem hohen apparativen Aufwand zudem sehr hohe Energiekosten.

Die Aufgabe der Erfindung besteht nun darin eine neuartige Vorrichtung zur Herstellung von Metallverbundrohren zu entwickeln, welche die vorgenannten Nachteile des Standes der Technik beseitigt und es ermöglicht Metallverbundrohre mit minimiertem technischen und energetischen Aufwand in hoher Qualität und mit hoher Produktionsgeschwindigkeit herzustellen, um bei minimierten Fertigungskosten, d.h. einem minimierten apparativen Aufwand und bei Einsatz kostengünstiger Haftvermittler sowie bei minimiertem Platzbedarf mit minimierten Energie- und Instandhaltungskosten eine hohe Qualität des Fertigproduktes zu gewährleisten und zudem eine lange Lebensdauer der Innenrohrextrusionswerkzeuge unter Vermeidung von ausfallbedingten Stillstandszeiten zu ermöglichen, sowie um durch eine instandhaltungsgerechte optimale Lösung zudem in kürzester Zeit mit minimierten Aufwand die Fertigungslinie auf jede andere zu fertigende Rohrdimension umzustellen und dadurch einen kostenminimierten Nennweitenwechsel zu ermöglichen.

Erfindungsgemäß wird diese Aufgabe mittels einer Vorrichtung zur Herstellung von Metallverbundrohren nach den Merkmalen des Hauptanspruches der Erfindung gelöst.

Erfindungsgemäß besteht die erfindungsgemäße Vorrichtung zur Herstellung von Metallverbundrohren (15) aus einer Bandzuführung (2), einem Grundgestell (1), einer am Grundgestell (1) angeordneten Bandformvorrichtung (3) und einem/mehreren dieser entgegen der Fertigungsrichtung benachbart angeordnetem/angeordneten Innenrohrextrusionswerkzeug/en (4) mit einer in die Rohrmitte führenden Druckgaszuführung (5) sowie einer in Fertigungsrichtung der Bandformvorrichtung (3) benachbart angeordneten Schweißvorrichtung (6) und einer in Fertigungsrichtung nach der Schweißvorrichtung (6) angeordneten Formstabilisierungsvorrichtung (7), die sich dadurch auszeichnet, dass zwischen der Bandformvorrichtung (3) und der Formstabilisierungsvorrichtung (7) im Bereich der Schweißvorrichtung (6) eine separate, auswechselbar angeordnete Kalibrierhülse (8) angeordnet ist, wobei sich der Kalibrierkopf (9) des Innenrohrextrusionswerkzeuges (4) vor der Kalibrierhülse (8) befindet und der am Kalibrierkopf (9) angeordnete Druckgasaustritt (10) innen durch die Kalibrierhülse hindurch bis fast in den Bereich der Formstabilisierungsvorrichtung (7) ragt.

Mittels dem Innenrohrextrusionswerkzeug (4) wird erfindungsgemäß ein am Außenumfang mit Haftvermittler (11) beschichtetes Kunststoffrohr (12) in die nach dem Innenrohrextrusionswerkzeug (4) erfindungsgemäß angeordnete Kalibrierhülse (8) hinein extrudiert.

In Innern dieser erfindungsgemäßen Kalibrierhülse (8) wird nun der Durchmesser und die Ovalität des extrudierten Kunststoffrohres (12) auf ein der jeweils zu fertigenden Nennweite entsprechendes Maß kalibriert.

Gleichzeitig wird aber am Außenmantel der erfindungsgemäßen Kalibrierhülse (8) das zugeführtes Metallband zu einem Rohr geformt und auf der Kalibrierhülse (8) verschweißt. Dabei kann das Rohr beispielsweise mit Hilfe einer Elektroden-Schweißanlage oder einer Laser-Schweißanlage stumpf, aber auch mit diesen oder anderen Schweißverfahren überlappt verschweißt, werden.

Nachdem nun das Metallband (13) zu einem Metallrohr (14) geformt und auf der Kalibrierhülse (8) verschweißt wurde, wird das mit einem Haftvermittler (12) beschichtete innerhalb der erfindungsgemäßen Kalibrierhülse (8) kalibrierte Kunststoffrohr (11) welches nun in Fertigungsrichtung das Innere der Kalibrierhülse (8) verlässt direkt in das den Außenmantel der Kalibrierhülse (8) in Fertigungsrichtung mit gleicher Fertigungsgeschwindigkeit verlassende geschweißte Metallrohr (14) eingeführt.

Mit Hilfe von Druckgas (beispielsweise Druckluft) welches aus dem erfindungsgemäß nach der Kalibrierhülse (8) angeordneten Druckgasaustritt (10) in das Innere des Kunststoffrohres (11) austritt wird nun das Kunststoffrohr (11) von innen an das Metallrohr (14) angepresst.

Dabei kommt es nun zu einer Reaktion des zwischen dem Kunststoffrohr (11) und dem Metallrohr (14) angeordneten Haftvermittler (12) wodurch das Kunststoffrohr über die Haftvermittlerschicht fest mit dem Metallrohr verbunden wird.

Nachfolgend kann das derart erfindungsgemäß hergestellte Metallverbundrohr in einer dafür geeigneten Kühlstrecke abgekühlt, oder mit weiteren Kunststoffschichten ummantelt und erst dann in geeigneter Weise abgekühlt werden.

Weitere wesentliche Vorteile der Anordnung einer erfindungsgemäßen Kalibrierhülse bestehen neben den beschriebenen Vorzügen der erfindungsgemäßen Anordnung zudem insbesondere darin, dass das Innenrohrextrusionswerkzeug (4) keinem Verschleiß infolge des Verschweißens des Metallrohres (14) unterworfen ist.

Beim bisherigen Stand der Technik ist das Innenrohrextrusionswerkzeug (4) aufgrund des auf dem Innenrohrextrusionswerkzeug (4) durchgeführten Schweißverfahrens beispielsweise nach ca. ein bis zwei Not-Stopp Situationen derart zerstört, dass jeweils das Innenrohrextrusionswerkzeug (4) komplett ersetzt werden muss.

Da die erfindungsgemäße Kalibrierhülse (8) separat und zudem aus jedem geeigneten im Stand der Technik für derartige Bauteile zur Verfügung stehenden Material gefertigt werden kann, kann mittels dieser separaten Kalibrierhülse (8) nicht nur eine optimale und schnelle Austauschbarkeit, sondern zugleich auch eine hohe Beständigkeit gegen die von der Kalibrierhülse (8) aufzunehmende und möglichst schnell über den gesamten Umfang der Kalibrierhülse (8) zu verteilende Schweißwärmeenergie gewährleistet werden.

Aufgrund ihrer erfindungsgemäß einfachen konstruktiven Bauform ist die Kalibrierhülse (4) zudem sehr kostengünstig herzustellen.

Doch selbst bei einem (beispielsweise aufgrund einer Vielzahl von Not-Stopp-Situationen) dennoch festgestellten Verschleiß der erfindungsgemäßen Kalibrierhülse (8) kann diese im Rahmen einer vorbeugenden Instandhaltung mit geringem Aufwand ausgewechselt werden, ohne dass (wie gegenwärtig im Stand der Technik leider üblich) erst nach dem unvorhergesehenen Totalausfall der Anlage ein Wechsel des kompletten Innenrohrextrusionswerkzeuges (4) durchgeführt wird.

Zudem bewirkt die bereits erwähnte sehr gute Verteilung der im Schweißprozess zugeführten Wärmenergie in der erfindungsgemäßen Kalibrierhülse (8), dass Abwärme des Schweißprozesses schnell und recht gleichmäßig in der Kalibrierhülse (8) und somit um diese herum verteilt wird, dadurch den Haftvermittler am gesamten Umfang des Kunststoffrohres (11) "beheizt" und somit wesentlich zu einer gleichmäßigen Reaktion des zwischen dem Kunststoffrohr (11) und Metallrohr (14) angeordneten Haftvermittler (12) beiträgt.

Da der Haftvermittler (12) wie bereits erläutert durch die erfindungsgemäße Kalibrierhülse (8) optimal temperiert im Heißklebeverfahren zwischen die zu verbindenden Schichten eingebracht wird, muss zudem der Haftvermittler (12) infolge der Anordnung der erfindungsgemäßen Kalibrierhülse (8) nicht wie bei anderen Verfahren zur Herstellung von Metallverbundrohren zwischenzeitlich mit hohem Aufwand aktiviert werden.

Dadurch wird mittels der erfindungsgemäßen Anordnung zudem bei minimierten Energiekosten ein optimaler Verbund zwischen dem Kunststoffrohr und dem Metallrohr erzielt.

Darüber hinaus wird infolge der schnellen und gleichmäßigen Verteilung der Schweißenergie in (und mittels) der erfindungsgemäßen Kalibrierhülse (8) nicht nur der Haftvermittler vor einer Überhitzung geschützt und dabei gleichzeitig zur "Reaktion" des Haftvermittlers optimal temperiert sondern zudem auch noch das Kunststoffrohr selbst vor einer bereichsweisen Überhitzung bewahrt.

Durch die Anwendung der erfindungsgemäßen Lösung konnte zudem auch die Lebensdauer des Innenrohrextrusionswerkzeuges (4) gegenüber den herkömmlich bei der Herstellung von Metallverbundrohren eingesetzten Innenrohrextrusionswerkzeugen (auf denen das Metallrohr verschweißt wurde) wesentlich gesteigert werden, da durch die erfindungsgemäße Lösung die "unmittelbare Fertigung" des Kunststoffinnenrohres vom Schweißvorgang komplett abgekoppelt wurde.

Dabei ist hervorzuheben, dass die Lebensdauer der erfindungsgemäßen Kalibrierhülse (8) zudem auch die Lebensdauer der bisher im Stand der Technik eingesetzten Innenrohrextrusionswerkzeuge um ein Vielfaches übersteigt und schon allein dadurch die Stillstands- und Ausfallzeiten bereits wesentlich reduziert werden.

Infolge der separaten Anordnung des Innenrohrextrusionswerkzeuges (4) vor der Kalibrierhülse (8) ist neben den bereits erwähnten Vorteilen zudem auch gleichzeitig eine einfache Handhabung bei Montage, Demontage und

Instandhaltungsarbeiten gewährleistet.

Infolge des erfindungsgemäß am Kalibrierkopf (9) angeordneten Druckgasaustrittes (10) welcher innen durch die Kalibrierhülse hindurch in die Formstabilisierungsvorrichtung (16) hineinragt wird wie bereits erläutert bewirkt, daß das mit Haftvermittler beschichtete Kunststoffrohr (11) mit dem Metallrohr mit (14) Hilfe von Druckluft oder speziellem Gas vollflächig und zudem gleichmäßig angepresst wird.

Die in diesem Bereich der Anlage am Außenmantel des Metallrohres (14) angeordnete Formstabilisierungsvorrichtung (7) verhindert dabei eine Durchmesserveränderung.

Gleichzeitig ermöglicht diese Anordnung zudem eine sofortige Dichtheitsprüfung der Schweißnaht.

Die erfindungsgemäße, unmittelbar der Bandformvorrichtung (3) benachbarte Anordnung der Kalibrierhülse (8) mit der dieser Kalibrierhülse (8) in Fertigungsrichtung benachbarten Anordnung einer Formstabilisierungsvorrichtung (7) gewährleistet zudem die Herstellung und

Einbringung des Kunststoffrohres in ein Metallrohr auf kürzester Fertigungsstrecke, so daß sich die Länge der gesamten Anlage erheblich verkürzt.

Infolge des erfindungsgemäßen Einbringens des Kunststoffrohres (11) auf kleinstem Raum in das Metallrohr (14) entfallen gegenüber dem bisherigen Stand der Technik auch verschiedene sehr energieaufwendige Prozesse, wie das Reaktivieren des Haftvermittlers (durch induktive Erwärmung), das Abziehen (zusätzlicher Rohrabzug), das zwischenzeitige Abkühlen (weitere Kühleinrichtungen) des Kunststoffrohres u.s.w., wodurch neben einer Reduzierung der Energiekosten auch eine hohe Einsparung an Wartungs- und

Instandhaltungskosten erzielt wird.

Gleichzeitig wird aber auch die Grundfläche der Anlage, d.h. deren Platzbedarfes deutlich reduziert wodurch weitere Kosten, wie beispielsweise die Kosten zur Herstellung der baulichen Hülle eingespart werden. Darüber hinaus wird zudem die Produktion zentralisiert, die Bedienung und Handhabung der Anlage verbessert und beispielsweise auch Fehlbedienungen vermieden.

Andererseits wird auch die Handhabung des Herstellungsverfahrens verbessert und beispielsweise ein schnellerer Nennweitenwechsel ermöglicht. Zusammenfassend kann somit festgestellt werden, daß mittels der erfindungsgemäßen Lösung gelungen ist eine Vorrichtung zur Herstellung von Metallverbundrohren zu entwickeln welche die Nachteile des gegenwärtigen Standes der Technik vermeidet und es ermöglicht Metallverbundrohre mit minimiertem technischen und energetischen Aufwand in hoher Qualität und bei hoher Produktionsgeschwindigkeit herzustellen, wobei die Anlage selbst zudem in kürzester Zeit und mit minimierten Aufwand auf jede andere zu fertigende Rohrdimension umgestellt werden kann, so dass bei minimiertem Aufwand eine große Sortimentsbreite in gleichmäßig hoher Qualität hergestellt, und zudem die Ausschussquote wesentlich gesenkt werden kann.

Vorteilhaft ist in diesem Zusammenhang auch, dass als Innenrohrextrusionswerkzeug (4) ein kombiniertes Innenrohrextrusionswerkzeug (4) mit einer an diesem angeordneten Innenrohrhaftvermittlereinheit (16) und einer ebenfalls am kombinierten Innenrohrextrusionswerkzeug (4) angeordneten Innenrohrextrudereinheit (17) eingesetzt wird.

Ein derartiges kombiniertes Innenrohrextrusionswerkzeug (4) verkürzt einerseits nochmals die erforderliche Baulänge der Fertigungslinie zur Herstellung eines mit einer Haftvermittlerschicht beschichteten, stabilen Kunststoffrohres und verkürzt zudem die Fließkanäle mit all den daraus resultierenden Vorteilen wie beispielsweise einer Reduzierung der zu beheizenden Teile der Fertigungslinie, einer Reduzierung der Arbeitsdrücke aber auch einer Reduzierung der Verweilzeiten der Kunststoffe im Innenrohrextrusionswerkzeug (4).

Gleichzeitig verkürzt ein derartiges kombiniertes Innenrohrextrusionswerkzeug (4) nochmals den Montage- und Demontageaufwand beispielsweise beim Wechsel der Nennweite der auf der Fertigungslinie gefertigten Metallverbundrohre:

In einer vorteilhaften Ausführung der erfindungsgemäßen Lösung können der Formstabilisierungsvorrichtung (7) in Fertigungsrichtung benachbart ein/mehrere Ummantelungswerkzeug/e (18) nachgeordnet sein. Dadurch wird es möglich ein, auch mit einer äußeren Plastbeschichtung versehenes Metallverbundrohr (15) mit minimalem Energieeinsatz herzustellen und dabei einen optimalen Verbund der einzelnen Schichten des Metallverbundrohres wie auch ein einfaches und schnelles Wechseln der jeweils zu fertigenden Nennweiten zu gewährleisten.

Weiterhin ist vorteilhaft, wenn auch das Ummantelungswerkzeug (18) als ein kombiniertes Ummantelungswerkzeug (18) mit einer an diesem angeschlossenen Außenrohrhaftvermittlereinheit (19) und einer an diesem angeschlossenen Außenrohrextrudereinheit (20) ausgebildet ist, dadurch können wiederum sehr kurze Fließkanäle vom Extruder zum jeweiligen Ummantelungswerkzeug (18) mit all den bereits in Verbindung mit dem Einsatz eines kombinierten Innenrohrextrusionswerkzeuges (4) beschriebenen Vorteile realisiert werden.

Nach dem Abkühlen wird das erfindungsgemäß hergestellte Metallverbundrohr mit firmenspezifischen Daten und beispielsweise mit der aktuellen Meterlänge versehen Nachfolgend wird dann das so hergestellte Metallverbundrohr auf die jeweils gewünschte Länge geschnitten und entweder als Coil aufgewickelt oder als Stangenware abgelegt.

Vorteilhafte Ausführungen, Einzelheiten und Merkmale der Erfindung ergeben sich aus den Unteransprüchen sowie der nachfolgenden Beschreibung des erfindungsgemäßen Ausführungsbeispielen in Verbindung mit den Zeichnungen zur erfindungsgemäßen Lösung.

Nachfolgend soll nun die Erfindung an Hand eines Ausführungsbeispieles in Verbindung mit drei Figuren näher erläutert werden.

Es zeigen dabei:
- Figur 1 :: die erfindungsgemäße Vorrichtung zur Herstellung von Metallverbundrohren in der Seitenansicht, (Schnitt A-A gemäß Figur 2);
- Figur 2 :: die erfindungsgemäße Vorrichtung zur Herstellung von Metallverbundrohren in der Draufsicht;
- Figur 3 :: die erfindungsgemäße Vorrichtung zur Herstellung von Metallverbundrohren in der Draufsicht mit den in der Fertigungslinie vor- und nachgeschalteten Baugruppen.

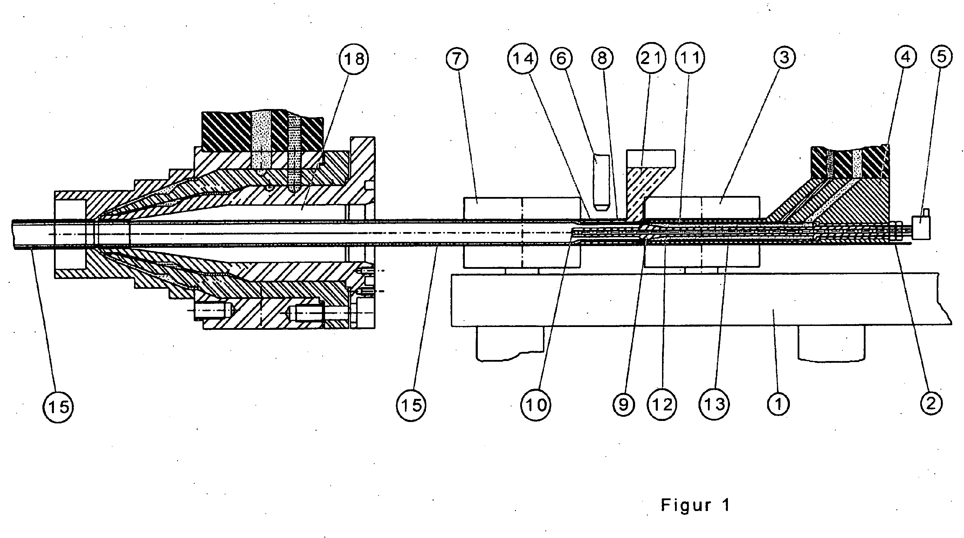

In der Figur 1 ist die erfindungsgemäße Vorrichtung zur Herstellung von Metallverbundrohren in der Seitenansicht im Schnitt dargestellt.

An einem Grundgestell 1 ist die Bandzuführung 2, eine Bandformvorrichtung 3 und ein kombiniertes Innenrohrextrusionswerkzeug 4 mit einer in die Rohrmitte führenden Druckgaszuführung 5 sowie einer der Bandformvorrichtung 3 in Fertigungsrichtung benachbart angeordneten Schweißvorrichtung 6 und einer in Fertigungsrichtung nach der Schweißvorrichtung 6 angeordneten Formstabilisierungsvorrichtung 7.

Zwischen der Bandformvorrichtung 3 und der Formstabilisierungsvorrichtung 7 ist im Bereich der Schweißvorrichtung 6 erfindungsgemäß eine Kalibrierhülse 8 angeordnet.

Der Kalibrierkopf 9 des Innenrohrextrusionswerkzeuges 4 ist vor der an einer Kalibrierhülsenhalterung 21 befestigten Kalibrierhülse 8 angeordnet. Der am Kalibrierkopf 9 angeordnete Druckgasaustritt 10 ragt innen durch die Kalibrierhülse 8 hindurch bis fast in den Bereich der Formstabilisierungsvorrichtung 7.

Mittels dem Innenrohrextrusionswerkzeug 4 wird erfindungsgemäß ein am Außenumfang mit Haftvermittler 11 beschichtetes Kunststoffrohr 12 in die nach dem Innenrohrextrusionswerkzeug 4 erfindungsgemäß angeordnete Kalibrierhülse 8 hinein extrudiert.

In Innern der erfindungsgemäßen Kalibrierhülse 8 wird der Durchmesser und die Ovalität des extrudierten Kunststoffrohres 12 auf ein der jeweils zu fertigenden Nennweite entsprechendes Maß kalibriert.

Gleichzeitig wird aber am Außenmantel der erfindungsgemäßen Kalibrierhülse 8 das zugeführtes Metallband zu einem Rohr geformt und auf der Kalibrierhülse 8 verschweißt.

Nachdem nun das Metallband 13 zu einem Rohr geformt und auf der Kalibrierhülse 8 Metallrohr 14 verschweißt wurde, wird das mit einem Haftvermittler 12 beschichtete innerhalb der erfindungsgemäßen Kalibrierhülse 8 kalibrierte Kunststoffrohr 11 aus der Kalibrierhülse (8) direkt in das den Außenmantel der Kalibrierhülse (8) in Fertigungsrichtung mit gleicher Fertigungsgeschwindigkeit verlassende geschweißte Metallrohr (14) eingeführt.

Mit Hilfe von Druckgas welches aus dem erfindungsgemäß nach der Kalibrierhülse 8 angeordneten Druckgasaustritt 10 in das innere des Kunststoffrohres 11 austritt wird nun das Kunststoffrohr 11 von innen an das Metallrohr 14 angepresst.

Dabei kommt es nun zu einer Reaktion des zwischen dem Kunststoffrohr 11 und dem Metallrohr 14 angeordneten Haftvermittler 12 wodurch das Kunststoffrohr über die Haftvermittlerschicht fest mit dem Metallrohr verbunden wird.

In Fertigungsrichtung ist der Formstabilisierungsvorrichtung 7 benachbart ein kombiniertes Ummantelungswerkzeug 18 nachgeordnet. Dadurch kann das innenbeschichtete Metallverbundrohr 15 mit minimalem Energieeinsatz auch mit einer äußeren Kunststoffbeschichtung versehen werden.

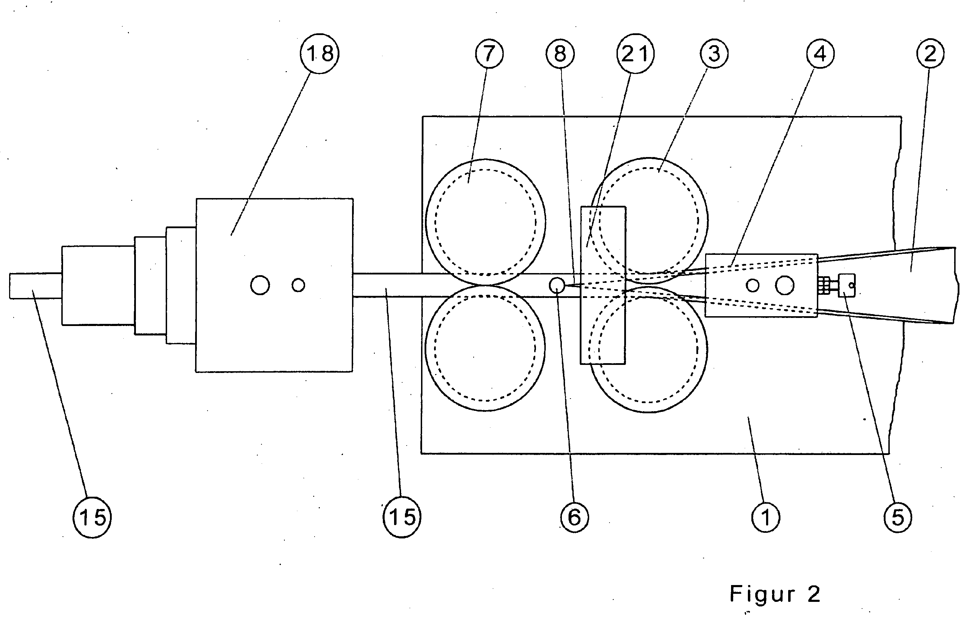

Die Figur 2 zeigt nun die erfindungsgemäße Vorrichtung zur Herstellung von Metallverbundrohren aus der Figur 1 in der Draufsicht.

An dem Grundgestell 1 ist die Bandzuführung 2, die Bandformvorrichtung 3 und ein kombiniertes Innenrohrextrusionswerkzeug 4 mit einer in die Rohrmitte führenden Druckgaszuführung 5, der in Fertigungsrichtung Bandformvorrichtung 3 benachbart angeordneten Schweißvorrichtung 6 und der in Fertigungsrichtung nach der Schweißvorrichtung 6 angeordneten Formstabilisierungsvorrichtung 7.

Zwischen der Bandformvorrichtung 3 und der Formstabilisierungsvorrichtung 7 ist im Bereich der Schweißvorrichtung 6 an einer Kalibrierhülsenhalterung 21 die Kalibrierhülse 8 angeordnet.

Der Formstabilisierungsvorrichtung 7 ist in Fertigungsrichtung benachbart ein kombiniertes Ummantelungswerkzeug 18 angeordnet, so dass das zunächst innenbeschichtete Metallverbundrohr 15 auch mit einer äußeren Plastbeschichtung versehen werden kann.

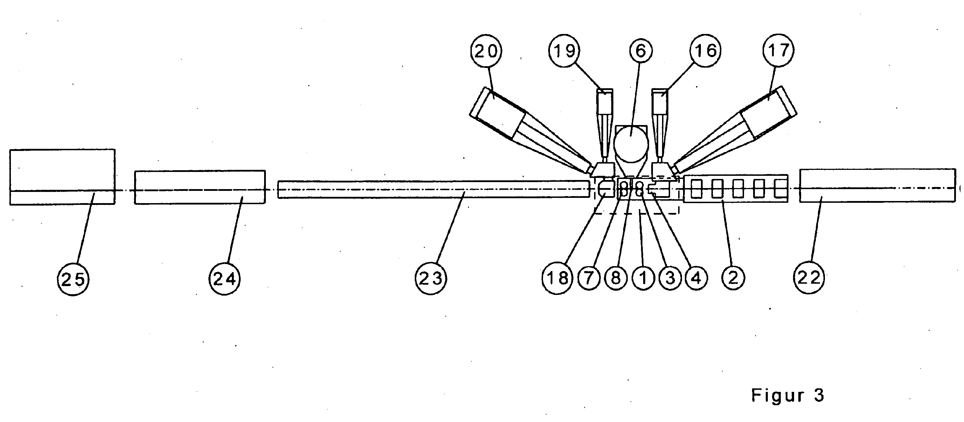

In der Figur 3 ist die erfindungsgemäße Vorrichtung zur Herstellung von Metallverbundrohren in der Draufsicht mit den in der Fertigungslinie vor- und nachgeschalteten Baugruppen dargestellt.

Aus einer Bandvorbereitung 22 wird das Metallband zunächst mittels einer Bandzuführung 2 vorgeformt und wie bereits erläutert zwischen der Bandformvorrichtung 3 und der Bandstabilisierungsvorrichtung 7 mittels einer Schweißvorrichtung 6 auf der erfindungsgemäßen Kalibrierhülse 8 verschweißt, während zeitgleich und mit gleicher Fertigungsgeschwindigkeit mittels eines kombinierten Innenrohrextrusionswerkzeuges 4 (mit einer an diesem angeordneten Haftvermittlereinheit 16 und einer ebenfalls an diesem angeordneten Innenrohrextrusionseinheit 17) ein am Außenumfang mit Haftvermittler beschichtetes Kunststoffrohr erfindungsgemäß in die Kalibrierhülse 8 hinein extrudiert wird.

In Fertigungsrichtung nach der Formstabilisierungsvorrichtung 7 ist weiterhin ein kombiniertes Ummantelungswerkzeug 18 mit einer an diesem angeschlossenen Außenrohrhaftvermittlereinheit 19 und einer ebenfalls am Ummantelungswerkzeug 18 angeschlossenen Außenrohrextrudereinheit 20 angeordnet, so daß auf dieser Fertigungslinie ein mit einer äußeren Plastbeschichtung versehenes Metallverbundrohr hergestellt werden kann. Dieses wird dann von einem beispielsweise mit einem Drucker versehenen Bandabzug 24 durch eine Kühlstrecke 23 hindurch abgezogen. Abschließend wird das so hergestellte Metallverbundrohr auf einem Wickler 25 aufgewickelt und ist somit als Coil versandfertig.

Mit der erfindungsgemäßen Lösung ist es gelungen eine Vorrichtung zur Herstellung von Metallverbundrohren zu entwickeln, welche die Nachteile des gegenwärtigen Standes der Technik vermeidet und es ermöglicht Metallverbundrohre mit minimiertem technischen und energetischen Aufwand mit hoher Qualität und bei hoher Produktionsgeschwindigkeit herzustellen und dabei die Anlage zudem in kürzester Zeit und mit minimierten Aufwand auf jede andere zu fertigende Rohrdimension umzustellen.

### Bezugszeichenzusammenstellung

- 1: Grundgestell
- 2: Bandzuführung
- 3: Bandformvorrichtung
- 4: Innenrohrextrusionswerkzeug
- 5: Druckgaszuführung
- 6: Schweißvorrichtung
- 7: Formstabilisierungsvorrichtung
- 8: Kalibrierhülse
- 9: Kalibrierkopf
- 10: Druckgasaustritt
- 11: Haftvermittler
- 12: Kunststoffrohr
- 13: Metallband
- 14: Metallrohr
- 15: Metallverbundrohr
- 16: Innenrohrhaftvermittlereinheit
- 17: Innenrohrextrusionseinheit
- 18: Ummantelungswerkzeug
- 19: Außenrohrhaftvermittlereinheit
- 20: Außenrohrextrusionseinheit
- 21: Kalibrierhülsenhalterung
- 22: Bandvorbereitung
- 23: Kühlstrecke
- 24: Bandabzug
- 25: Wickler

## Patentansprüche

1. Vorrichtung zur Herstellung von Metallverbundrohren mit einer Bandzuführung (2), einem Grundgestell (1), einer am Grundgestell (1) angeordneten Bandformvorrichtung (3) und mindestens einem dieser entgegen der Fertigungsrichtung benachbart angeordneten Innenrohrextrusionswerkzeug (4) mit einer in die Rohrmitte führenden Druckgaszuführung (5) sowie einer in Fertigungsrichtung der Bandformvorrichtung (3) benachbart angeordneten Schweißvorrichtung (6) und einer in Fertigungsrichtung nach der Schweißvorrichtung (6) angeordneten Formstabilisierungsvorrichtung (7), **dadurch gekennzeichnet, dass** zwischen der Bandformvorrichtung (3) und der Formstabilisierungsvorrichtung (7) im Bereich der Schweißvorrichtung (6) eine separate, auswechselbar angeordnete Kalibrierhülse (8) angeordnet ist, wobei sich der Kalibrierkopf (9) des Innenrohrextrusionswerkzeuges (4) vor der Kalibrierhülse (8) befindet und der Druckgasaustritt (10) durch die Kalibrierhülse (8) und den Kalibrierkopf (9) hindurch bis in den Bereich der Formstabilisierungsvorrichtung (7) hineinragt.

2. Vorrichtung zur Herstellung von Metallverbundrohren nach Anspruch 1, **dadurch gekennzeichnet, dass** als Innenrohrextrusionswerkzeug (4) ein kombiniertes Innenrohrextrusionswerkzeug (4) mit einer an diesem angeordneten Innenrohrhaftvermittlereinheit (16) und einer an diesem angeordneten Innenrohrextrudereinheit (17) eingesetzt wird.

3. Vorrichtung zur Herstellung von Metallverbundrohren nach Anspruch 1, **dadurch gekennzeichnet, dass** in Fertigungsrichtung benachbart zur Formstabilisierungsvorrichtung (7) mindestens ein Ummantelungswerkzeug (18) angeordnet sind.

4. Vorrichtung zur Herstellung von Metallverbundrohren nach Ansprüche 3, **dadurch gekennzeichnet, dass** das Ummantelungswerkzeug (18) als kombiniertes Ummantelungswerkzeug (18), mit einer an diesem angeschlossenen Außenrohrhaftvermittlereinheit (19) und einer an diesem angeschlossenen Außenrohrextrudereinheit (20), ausgebildet ist.

## Claims

1. Device for manufacturing composite metal pipes with a sheet supply (2) a main frame (1) a sheet shaping device (3) fitted to the main frame (1) and with an adjacent interior pipe extrusion tool (4) fitted opposite to the direction of production with a compressed gas supply travelling in the center of the pipe and also an adjacent welding device (6) in the direction of production of the belt shaping device (3) and a shape stabilization device (7) fitted on the direction of production after the welding device (6) **characterised by** the fact that a separate, exchangeable calibration sleeve (8) is fitted between the sheet shaping device (3) and the shape stabilization device (7) in the area of the welding device (6), where the calibration head (9) of the interior pipe extrusion tool (4) is located in front of the calibration sleeve (8) and the compressed gas outlet (10) penetrates through the calibration sleeve (8) and the calibration head (9) into the area of the shape stabilization device (7).

2. Device for manufacturing composite metal pipes in accordance with claim 1, **characterized by** the fact that a combined interior pipe extrusion tool (4) with an interior pipe bonding unit (16) attached to this and an interior pipe extrusion tool (17) attached to this is used as an interior pipe extrusion tool.

3. Device for manufacturing composite metal pipes in accordance with claim 1, **characterized by** the fact that at least one cladding tool (18) is fitted in the direction of production next to the shape stabilization device (7).

4. Device for manufacturing composite metal pipes in accordance with claim 3, **characterized by** the fact that the cladding tool (18) is constructed as a combined cladding tool (18) with an exterior pipe bonding unit (19) attached to it and an exterior pipe extrusion tool (20) attached to it.

## Revendications

1. Dispositif et procédé de tubes d'assemblage en métal avec un guidage de bande (2), un châssis de base (1), un dispositif de forme de bande (3) placé sur le châssis de base (1) et au moins un outil d'extrusion de tube intérieur (4) disposé au voisinage de ce dispositif dans le la direction inverse du sens de fabrication, avec une admission de gaz comprimé (5) conduisant vers le centre du tube ainsi qu'un dispositif de soudage (6) placé dans le sens de fabrication et disposé au voisinage du dispositif de forme de bande (3) et avec un dispositif de stabilisation de forme (7) placé dans le sens de fabrication et après le dispositif de soudage (6), **caractérisé par le fait que**, entre le dispositif de forme de bande (3) et le dispositif de stabilisation de forme (7) dans la zone du dispositif de soudage (6), est disposée une douille d'étalonnage (8) séparée et interchangeable, la tête d'étalonnage (9) de l'outil d'extrusion de tube intérieur (4) se trouvant avant la douille d'étalonnage (8), la sortie de gaz comprimé (10) passant au travers de la douille d'étalonnage (8) et la tête d'étalonnage (9) rentrant jusque dans la zone du dispositif de stabilisation de forme (7).

2. Dispositif et procédé de tubes d'assemblage en métal selon l'exigence 1 **caractérisé par le fait qu'**un outil combiné d'extrusion de tube intérieur (4) avec une unité d'agent adhésif de tube intérieur (16) disposée sur celui-ci et une unité d'extrusion de tube intérieur (17) disposée sur celui-ci est utilisé comme outil d'extrusion de tube intérieur.

3. Dispositif et procédé de tubes d'assemblage en métal selon l'exigence 1 **caractérisé par le fait qu'**au moins un outil de revêtement (18) est disposé dans le sens de fabrication au voisinage du dispositif de stabilisation de forme (7).

4. Dispositif et procédé de tubes d'assemblage en métal selon l'exigence 3 **caractérisé par le fait que** l'outil de revêtement (18) est conçu comme outil combiné de revêtement (18) avec une unité d'agent adhésif de tube extérieur (19) raccordée à celui-ci et une unité d'extrusion de tube extérieur (20) raccordée à celui-ci.
